(19) **Europäisches Patentamt**
**European Patent Office**
**Office européen des brevets**

(11) **EP 4 109 378 A1**

(12) **EUROPEAN PATENT APPLICATION**
published in accordance with Art. 153(4) EPC

(43) Date of publication:
**28.12.2022 Bulletin 2022/52**

(21) Application number: **20925535.5**

(22) Date of filing: **18.06.2020**

(51) International Patent Classification (IPC):
**G06Q 50/06** (2012.01)     **G06N 3/08** (2006.01)

(52) Cooperative Patent Classification (CPC):
**G06N 3/08; G06Q 50/06**

(86) International application number:
**PCT/KR2020/007878**

(87) International publication number:
**WO 2021/187672 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.03.2020 KR 20200034613**

(71) Applicant: **Industry-University Cooperation Foundation**
**Hanyang University ERICA Campus**
**Ansan-si, Gyeonggi-do 15588 (KR)**

(72) Inventors:
• **HONG, Seung Ho**
**Seoul 06289 (KR)**
• **LU, Renzhi**
**Ansan-si Gyeonggi-do 15588 (KR)**

(74) Representative: **Brevalex**
**95, rue d'Amsterdam**
**75378 Paris Cedex 8 (FR)**

(54) **ENERGY MANAGEMENT SYSTEM AND ENERGY MANAGEMENT METHOD**

(57)     Embodiments of the present invention provide an energy management system and an energy management method, the system comprising: a reception unit for receiving energy price information from an energy supplier; an output unit for outputting predicted energy price information by inputting, into an artificial neural network (ANN), environment information including the energy price information; and a determination unit for determining the energy consumption action of each of a plurality of energy consumption devices at time (h) on the basis of determination information including the predicted energy price information, wherein the determination unit repetitively performs, until a set completion condition is satisfied, an update step of updating a Q value determined on the basis of an energy consumption state and an energy consumption action of each energy consumption device along time in order to determine the energy consumption action at time (h).

*FIG.1*

**Description**

**Technical Field**

Embodiments of the present invention relate to an energy management system and an energy management method.

**Background Art**

As energy demand increases with industrial development, managing the demand response (DR) of various entities consuming energy is emerging as an important issue. To this end, there are ongoing vigorous efforts to research energy management devices, methods and systems for managing demand reaction in various fields.

In particular, various energy management systems have been developed to optimize energy consumption by managing the demand reaction of energy consuming devices installed in homes or commercial facilities. However, conventional energy management systems are established based on deterministic rules, abstract model, mixed integer linear programming (MILP) or game theory and thus do not guarantee optimization or do not fit for real energy consuming devices.

**Detailed Description of the Invention**

**Technical Problem**

In the foregoing background, embodiments of the present invention may provide an energy management system and energy management method that are adaptable to various environments without depending on a specific model.

Further, embodiments of the present invention may provide an energy management system and energy management method that may minimize the sum of the cost due to energy consumption and the cost of dissatisfaction.

**Technical Solution**

In an aspect, embodiments of the present invention may provide an energy management system controlling a plurality of energy consuming devices comprising a receiving unit receiving energy price information from an energy provider, an output unit outputting expected energy price information by inputting environment information including the energy price information to an artificial neural network (ANN), and a determining unit determining an energy consumption action at time h of each of the plurality of energy consuming devices based on determination information including the expected energy price information, wherein the determining unit repeats an update step of updating a Q value determined based on an energy consumption state and energy consumption action over time, of each energy consuming device, until a preset termination condition is met, to determine the energy consumption action at time h.

In another aspect, embodiments of the present invention may provide an energy management method controlling a plurality of energy consuming devices comprising a receiving step receiving energy price information from an energy provider, an outputting step outputting expected energy price information by inputting environment information including the energy price information to an artificial neural network (ANN), and a determining step determining an energy consumption action at time h of each of the plurality of energy consuming devices based on determination information including the expected energy price information, wherein the determining step repeats an update step of updating a Q value determined based on an energy consumption state and energy consumption action over time, of each energy consuming device, until a preset termination condition is met, to determine the energy consumption action at time h.

**Advantageous Effects**

According to embodiments of the present invention, there may be provided an energy management system and energy management method that are adaptable to various environments without depending on a specific model.

Further, according to embodiments of the present invention, there may be provided an energy management system and energy management method that may minimize the sum of the cost due to energy consumption and the cost of dissatisfaction.

**Brief Description of Drawings**

FIG. 1 is a block diagram illustrating an energy management system according to an embodiment of the present invention;

FIG. 2 is a view illustrating reinforcement learning through an interaction between an energy management system and an energy consuming device according to embodiments of the present invention;

FIG. 3 is a view illustrating an example of a type of an energy consuming device according to embodiments of the present invention;

FIG. 4 is a view illustrating an energy management system and an energy consuming device according to embodiments of the present invention;

FIG. 5 is a view illustrating an example of an artificial neural network according to embodiments of the present invention;

FIG. 6 is a flowchart illustrating an example in which an operation of an energy management system determines an energy consumption action by each energy consuming device at time h according to embodiments of the present invention;

FIG. 7 is a flowchart illustrating an example of an operation of updating a Q value at time h by an energy consuming device according to embodiments of the present invention;

FIG. 8 is a view illustrating an example in which a determining unit selects an energy consumption action by an energy consuming device at time h according to embodiments of the present invention; and

FIG. 9 is a flowchart illustrating an energy management method according to embodiments of the present invention.

## Mode for Carrying out the Invention

Hereinafter, embodiments of the disclosure are described in detail with reference to the accompanying drawings. The same or substantially the same reference denotations are used to refer to the same or substantially the same elements throughout the specification and the drawings. When determined to make the subject matter of the present invention unclear, the detailed description of the known configurations or functions may be skipped.

Such denotations as "first," "second," "A," "B," "(a)," and "(b)," may be used in describing the components of the present invention. These denotations are provided merely to distinguish a component from another, and the essence of the components is not limited by the denotations in light of order or sequence. When a component is described as "connected," "coupled," or "linked" to another component, the component may be directly connected or linked to the other component, but it should also be appreciated that other components may be "connected," "coupled," or "linked" between the components.

In embodiments of the present invention, the type of energy may be electrical energy, thermal energy, light energy, or the like. Although the following embodiments of the present invention focus primarily on the type of energy being electrical energy, the type of energy is not limited thereto.

Hereinafter, an energy management device, an energy management method, and an energy management system according to embodiments of the present invention are described with reference to related drawings.

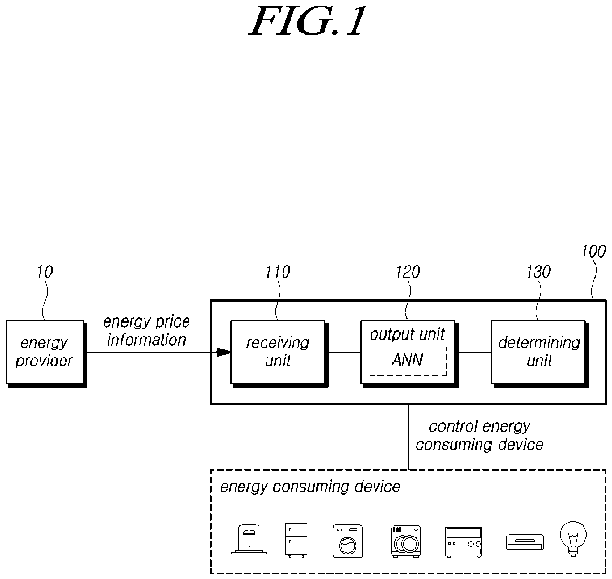

FIG. 1 is a block diagram illustrating an energy management system according to an embodiment of the present invention.

Referring to FIG. 1, the energy management system 100 for controlling a plurality of energy consuming devices may include a receiving unit 110, an output unit 120, and a determining unit 130.

The energy consuming device refers to any device capable of consuming energy to perform a specific operation. For example, the energy consuming device may be an electric device (e.g., a refrigerator/washing machine/air conditioner/light/heater, etc.) used in a home or commercial facility. The energy consuming device may interact with the energy management system 100 while transmitting and receiving information.

The receiving unit 110 may receive energy price information from an energy provider 10. The energy provider 10 refers to an entity (e.g., a power company) that supplies energy to the energy consuming device to consume energy. The energy management system 100 may receive the energy price information from the energy provider 10 and may transmit energy consumption information about a plurality of energy consuming devices controlled by the energy management system to the energy provider 10.

Energy price information is information indicating the cost (e.g., 40$/MWh) incurred when unit energy is consumed at a specific time. For example, the energy price information may indicate the cost incurred when consuming unit energy one hour after the current time.

The output unit 120 may input environment information, including the energy price information received from the energy provider 10 by the receiving unit 110, to an artificial neural network (ANN) and output expected energy price information. In this case, the output expected energy price information is information indicating an expected cost that is incurred when consuming unit energy after the time indicated by the above-described energy price information.

The environment information means various pieces of information necessary for the artificial neural network (ANN) to determine the expected energy price information.

The determining unit 130 may determine the energy consumption action at time h by each of the plurality of energy consuming devices based on determination information including the expected energy price information output from the output unit 120.

The energy consumption action at time h by the energy consuming device means a specific operation executed by the energy consuming device to consume energy at a specific time h (e.g., 15:00). For example, the energy consumption action at time h by the energy consuming device may instruct the energy consuming device to perform an on operation, an off operation, or a room heating operation using a power of 100MWh. In this case, time h is any time later than the current time.

In this case, the determining unit 130 may repeat an update step of updating the Q value determined based on the energy consumption action and the energy consumption state over time by each energy consuming device, until a preset termination condition is met, to determine the energy consumption action at time h by each of the plurality of energy consuming devices.

The Q value is a value for evaluating the result of performing a specific energy consumption action in a specific energy consumption state and may be used to determine what energy consumption action each energy consuming device should perform in the specific energy consumption state. The Q value has factors including the energy consumption state s and energy consumption action a of the energy consuming device and be represented as Q(s, a). The Q value may be a value determined by any equation using the energy consumption state s and the energy consumption action a as its factors.

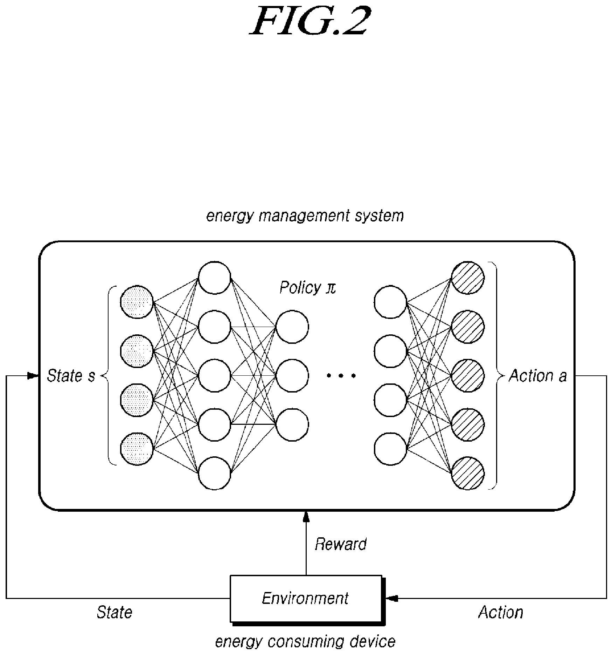

FIG. 2 is a view illustrating reinforcement learning through an interaction between an energy management system 100 and an energy consuming device according to embodiments of the present invention.

The interaction between the energy management system 100 and the plurality of energy consuming devices is based on a Markov decision process (MDP) indicating a relationship between the state, the action, and the reward.

The energy management system 100 may perform reinforcement learning (RL) to optimize a policy $\pi$ for controlling each energy consuming device while interacting with each energy consuming device.

Specifically, the energy management system 100 may determine an action a according to the policy $\pi$ after receiving the state s of each energy consuming device. After executing the action a, each energy consuming device may determine a reward according to the result and feed it back to the energy management system 100. The energy management system 100 may change the policy $\pi$ according to the fed back reward. Further, each energy consuming device may input the changed state back to the energy management system 100 after performing the action a.

As such, the energy management system 100 and each energy consuming device may repeat the interactions while exchanging information about states, actions, and rewards with each other, so that the energy management system 100 may learn an optimized policy for controlling each energy consuming device.

In this case, an action that each energy consuming device may perform, in other words, an energy consumption action for each time by each energy consuming device, may be determined to differ depending on the type of each energy consuming device.

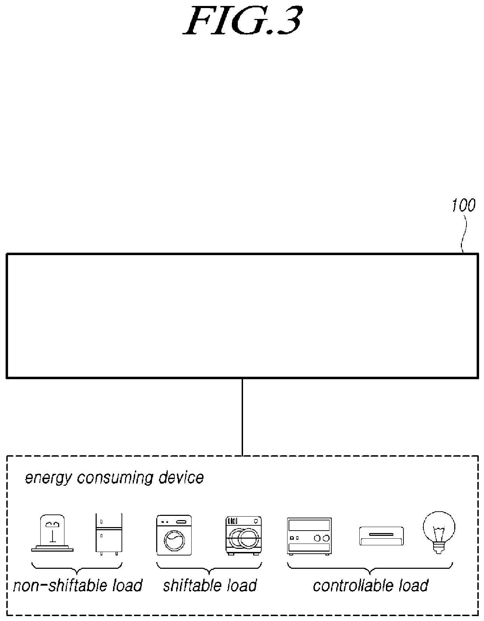

FIG. 3 is a view illustrating an example of a type of an energy consuming device according to embodiments of the present invention.

Referring to FIG. 3, the type of energy consuming device may be any one of 1) a non-shiftable load type, 2) a shiftable load type, and 3) a controllable load type.

An energy consuming device of the non-shiftable load type may execute only one energy consumption action (e.g., an on operation) to meet a specific requirement. For example, since a refrigerator has to operate for 24 hours to keep the food fresh, the refrigerator may execute only the on operation which always consumes energy.

An energy consuming device of the shiftable load type may execute only two energy consumption actions (e.g., on/off). For example, a washing machine may only perform an on operation that consumes energy or an off operation that does not consume energy. The energy consuming device of the shiftable load type may incur a different energy consumption cost depending on what time it performs the on operation at.

An energy consuming device of the controllable load type may execute a plurality of energy consumption actions corresponding to different energy consumption. For example, an air conditioner may have different energy consumption depending on set temperatures. The energy consuming device of the controllable load type may incur a different energy consumption cost depending on what energy consumption action it executes at what time.

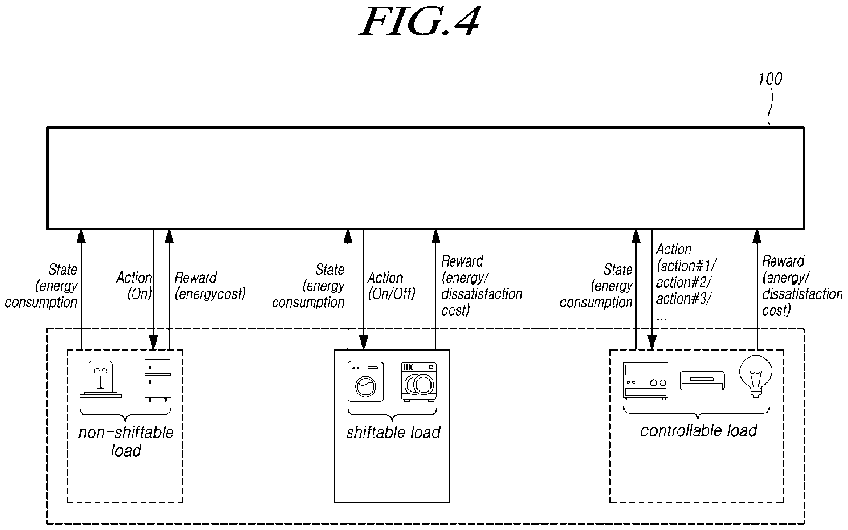

FIG. 4 is a view illustrating an energy management system 100 and an energy consuming device according to embodiments of the present invention.

As described above, the energy management system 100 may determine an action according to the policy after receiving the state of each energy consuming device. After executing the action, each energy consuming device may determine a reward according to the result, based on a reward function and feed it back to the energy management system 100.

The non-shiftable load type energy consuming device may output energy consumption state information to the energy management system 100. The energy management system 100 may indicate one energy consumption action (e.g., on) executable by the non-shiftable load type energy consuming device. The non-shiftable load type energy consuming device may perform the energy consumption action indicated by the energy management system 100 and output a reward according to the result to the energy management system 100. In this case, the reward may be a cost due to energy consumption. The cost due to energy consumption may be determined based on the above-described expected energy price information and energy consumption.

The shiftable load type energy consuming device may output energy consumption state information to the energy management system 100. The energy management system 100 may indicate any one (e.g., on or off) of the two energy consumption actions executable by the shiftable load type energy consuming device. The shiftable load type energy consuming device may perform the energy consumption action indicated by the energy management system 100 and output a reward according to the result to the energy management system 100. In this case, the reward may be a cost due to energy consumption and a dissatisfaction cost. The cost due to energy consumption may be determined based on the above-described expected energy price information and energy consumption.

The controllable load type energy consuming device may output energy consumption state information to the energy management system 100. The energy management system 100 may indicate any one of the plurality of energy consumption actions executable by the controllable load type energy consuming device. The controllable load type energy consuming device may perform the energy consumption action indicated by the energy management system 100 and output a reward according to the result to the energy management system 100. In this case, the reward may be a cost due to energy consumption and a dissatisfaction cost. The cost due to energy consumption may be determined based on the above-described expected energy price information and energy consumption.

The dissatisfaction cost is a cost indicating the degree of dissatisfaction experienced by the user who uses the energy consuming device when the energy consuming device executes an energy consumption action other than an energy consumption action that consumes energy to the maximum. For example, the dissatisfaction cost for a washing machine may be a cost experienced by the user when the washing machine is turned off so that washing is not performed. As such, the dissatisfaction cost may increase in proportion to the reduction in energy consumption to save energy consumption costs.

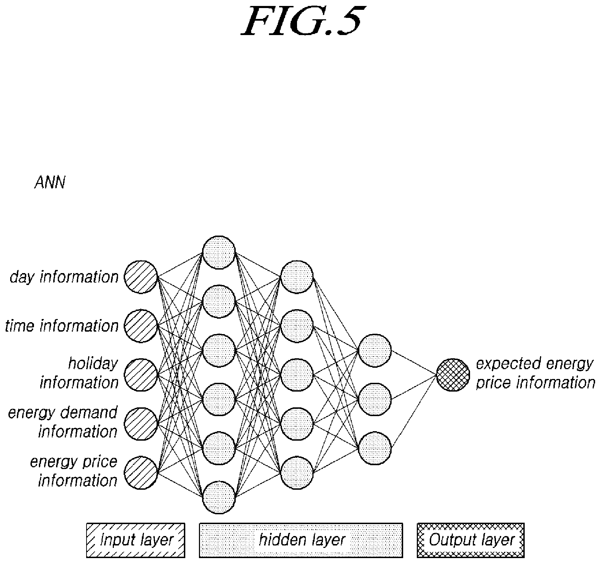

FIG. 5 is a view illustrating an example of an artificial neural network (ANN) according to embodiments of the present invention.

An artificial neural network (ANN) may include one input layer, a plurality of hidden layers, and one output layer.

In this case, the environment information input to the artificial neural network (ANN) may include day information, time information, holiday information, energy demand information, and energy price information.

The day information may indicate the day of the week to which the current time corresponds among Sunday/Monday/Tuesday/Wednesday/Thursday/Friday/Saturday. As an example, the day information may be one of 1 to 7.

The time information may indicate which time it is among the 24 hours of the day. For example, the time information may be one of 1 to 24.

The holiday information may indicate whether the current time is a holiday or not. As an example, the holiday information may be 0 or 1.

The energy demand information may indicate the energy demand for all the entire energy consuming devices at one or more specific times.

When the above-described environment information is input to the input layer of the artificial neural network (ANN), the artificial neural network (ANN) may output expected energy price information according to the configuration of the hidden layer.

Meanwhile, the artificial neural network (ANN) may be a type of model that may automatically learn features for input values based on a large amount of data and train the network to minimize errors in the objective function, i.e., prediction accuracy.

The artificial neural network (ANN) may be a convolutional neural network (CNN), deep hierarchical network (DHN), convolutional deep belief network (CDBN), deconvolutional deep network (DDN), recurrent neural network (RNN), or generative adversarial network (GAN), but without limitations thereto, may be various deep learning models that may be used currently or in the future. The deep learning model may be implemented through a deep learning framework. The deep learning framework plays a role to provide a library of functions commonly used when developing the deep learning model and to support the system software or hardware platform to be properly used. In this embodiment, the deep learning model may be implemented using any deep learning framework that has been currently disclosed or will be disclosed in the future.

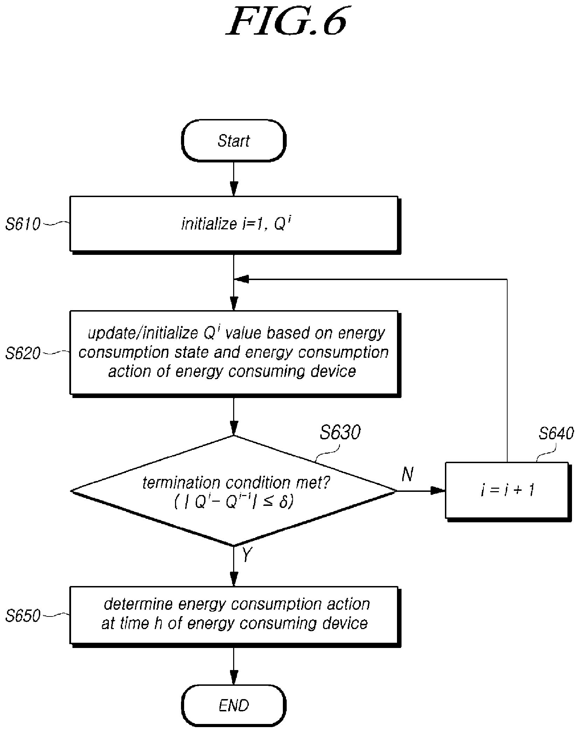

FIG. 6 is a flowchart illustrating an example in which an operation of an energy management system 100 determines an energy consumption action by each energy consuming device at time h according to embodiments of the present invention.

Referring to FIG. 6, the determining unit 130 of the energy management system 100 may initialize the above-described Q value for the energy consuming device.

First, the determining unit 130 may initialize the value of i indicating the number of iterations to 1 and initialize Q', which is the Q value at the ith iteration (S610). In this case, the Q' value may be initialized to 0 or a random value.

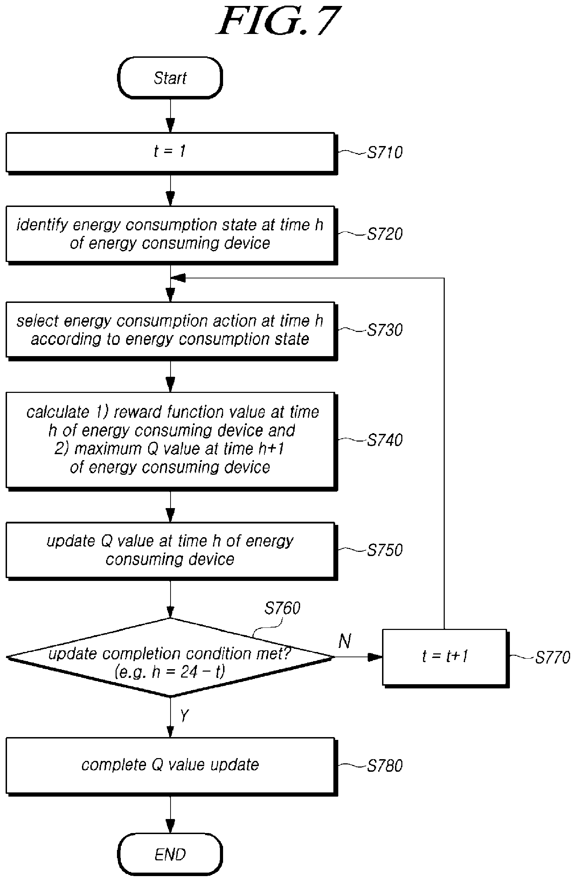

The determining unit 130 may update the $Q^i$ value based on the energy consumption state and energy consumption action of the energy consuming device (S620). An example of the operation of updating the Q value of the energy consuming device is described below with reference to FIG. 7.

The determining unit 130 may determine whether a set termination condition is met after performing step S620 (S630).

The termination condition may be a condition where $|Q^i - Q^{i-1}|$, which is an error between Q', which is the Q value determined at the current update step, i.e., the ith update step, and $Q^{i-1}$, which is the Q value determined at the step immediately before the current update step, i.e., the (i-1)th update step, is a threshold error $\delta$ or less. However, when i=1, the update step immediately before the current update step is absent and, thus, as the $Q°$, which is the Q value at this time, any value other than $Q^1$ may be selected.

In general, when the Q value at time h of each energy consuming device is repeatedly updated, the Q value has a pattern of gradually increasing from the initial value and then converging to a specific value. Therefore, when $|Q^i - Q^{i-1}|$ is less than or equal to the threshold error $\delta$, the determining unit 130 may determine that the Q value converges to a specific value and stop updating the $Q^i$ value.

If the termination condition is not met (S630-N), the determining unit 130 may increase the i value by 1 (S640) and execute step S620 again.

If the termination condition is met (S630-Y), the determining unit 130 may stop updating the $Q^i$ value and determine the energy consumption action at time h of the energy consuming device (S650). In this case, the determining unit 130 may determine the energy consumption action at time h of the energy consuming device based on the argmax value for the above-described Q value.

FIG. 7 is a flowchart illustrating an example of a specific operation of updating a Q value at time h by an energy consuming device according to embodiments of the present invention.

Referring to FIG. 7, the determining unit 130 of the energy management system 100 may initialize the variable t value to 1 for the energy consuming device n (S710). The variable t value is a variable value used to indicate an update completion condition.

The determining unit 130 may identify the energy consumption state at time h of the energy consuming device n (S720). The energy consumption state at time h of the energy consuming device n may be represented as $s_{n, h}$.

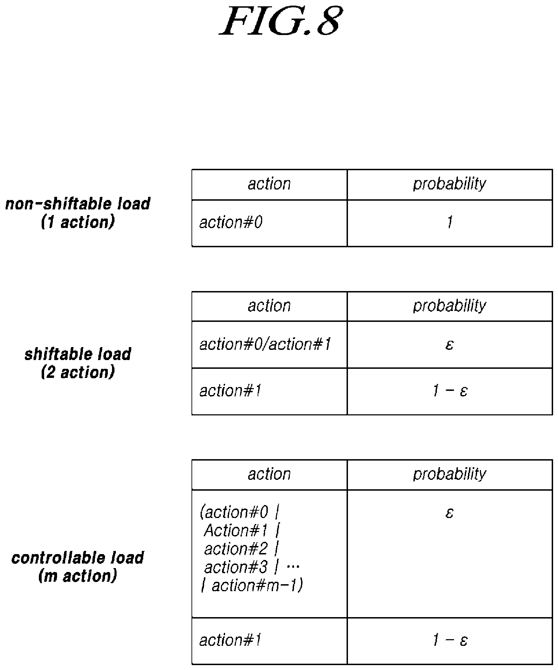

The determining unit 130 may select one energy consumption action from a list of selectable energy consumption actions according to the energy consumption state of the energy consuming device n (S730). For example, if the energy consuming device n is of the non-shiftable load type, the determining unit 130 may select only one energy consumption action (e.g., on), if it is of the shiftable load type, select one of two energy consumption actions (e.g., on/off), and if it is of the controllable load type, select one of a plurality of energy consumption actions. The energy consumption action selected at time h of the energy consuming device n may be represented as $a_{n, h}$. An example in which the determining unit 130 selects one energy consumption action from a list of selectable energy consumption actions is described below with reference to FIG. 8.

Thereafter, the determining unit 130 may calculate 1) a reward function value at time h of the energy consuming device n and 2) a maximum value of the Q value at time h+1 of the energy consuming device n (S740).

The reward function at time h of the energy consuming device n is a function for determining a reward according to the energy consumption state and energy consumption action and may be represented as $r(s_{n,h}, a_{n,h})$.

The Q value at time h+1 of the energy consuming device n may be represented as $Q(s_{n,h+1}, a_{n,h+1})$. If the energy consumption state $s_{n,h}$ and energy consumption action $a_{n,h}$ at time h are determined, the energy consumption state $s_{n,h+1}$ at time h+1 is determined according to the model described in connection with FIG. 2. In the energy consumption state $s_{n,h+1}$ at time h+1, the energy consuming device n may execute one energy consumption action $a_{n,h+1}$ among energy consumption actions executable according to the type. The Q value at time h+1 of the energy consuming device n may be varied depending on which energy consumption action is selected, and among them, the maximum value is represented as $\max Q(s_{n,h+1}, a_{n,h+1})$.

Thereafter, the determining unit 130 may update the Q value $Q(s_{n,h}, a_{n,h})$ at time h of the energy consuming device n based on the values calculated at step S740 (S750). For example, the determining unit 130 may update the Q value according to Equation 1 below.

[Equation 1]

$$Q(s_{n,h}, a_{n,h}) \leftarrow Q(s_{n,h}, a_{n,h}) + \theta[r(s_{n,h}, a_{n,h}) + \gamma \max Q(s_{n,h+1}, a_{n,h+1}) - Q(s_{n,h}, a_{n,h})]$$

In Equation 1, $\theta \in [0,1]$ is the learning rate for determining the rate at which the previous Q value is updated. $\theta$

may be determined as a value between 0 and 1, and if $\theta$ is 0, it may mean that the previous Q value is maintained while if $\theta$ is 1, the previous Q value is disregarded, and a new Q value is determined all the time. The determining unit 130 may set the $\theta$ value arbitrarily.

In Equation 1, $\gamma \in [0,1]$ is the discount factor for determining the rate at which the current reward information $r(s_{n,h}, a_{n,h})$ and the future prediction value max $Q(s_{n,h+1}, a_{n,h+1})$ are to be reflected. $\gamma$ may be determined as a value between 0 and 1. If $\gamma$ is 0, it means that only the current reward information is reflected, and if $\gamma$ is 1, it means that the future prediction value is reflected to the maximum. The determining unit 130 may set the $\gamma$ value arbitrarily.

Thereafter, the determining unit 130 determines whether the set update completion condition is met (S760).

As an example, the update completion condition may be h = 24-t. In other words, the number of times at the Q value is updated varies depending on the value of the current time h. For example, if the value of time h is 15, since 15 = 24-9, the determining unit 130 may update the Q value 9 times until t = 9.

If the update completion condition is not met (S760-N), the determining unit 130 may increase the t value by 1 (S770) and repeat the process from step S730 again.

On the other hand, if the update completion condition is met (S760-Y), the determining unit 130 may complete the Q value update (S780).

FIG. 8 is a view illustrating an example in which a determining unit 130 selects an energy consumption action by an energy consuming device at time h according to embodiments of the present invention.

The determining unit 130 may select an energy consumption action at time h of the energy consuming device based on, e.g., an epsilon-greedy ($\varepsilon$-greedy) policy.

The epsilon-greedy policy is a variant of the greedy policy that performs the best choice at each step. The epsilon-greedy policy means a policy that randomly selects an energy consumption action with a probability of $\varepsilon$, a value between 0 and 1 and selects an action with the best outcome with a probability of 1-$\varepsilon$, that is, an energy consumption action to maximize the Q value.

The operation of selecting the energy consumption action at time h of the energy consuming device according to the epsilon-greedy policy may vary depending on the type of the energy consuming device.

For example, if the type of the energy consuming device is the non-shiftable load type, the energy consuming device may execute only one energy consumption action action#0. Accordingly, the determining unit 130 always selects the energy consumption action action#0 even when the epsilon-greedy policy is used.

As another example, it is assumed that the type of the energy consuming device is the shiftable load type, and the energy consuming device may execute one of two energy consumption actions action#0 and action#1. In this case, if the energy consumption action action#1 is an energy consumption action that maximizes the Q value, the determining unit 130 may randomly select one of the energy consumption actions action#0 and action#1 with a probability of $\varepsilon$ and may select the energy consumption action action #1 with a probability of 1-$\varepsilon$.

As another example, it is assumed that the type of energy consuming device is the controllable load type and the energy consuming device may execute one of m energy consumption actions action#0, action#1,..., action#m-1. In this case, if the energy consumption action action#1 is an energy consumption action that maximizes the Q value, the determining unit 130 may randomly select one of the energy consumption actions action#0, action#1, action#2, action#3, ..., action#m-1 with a probability of $\varepsilon$ and may select the energy consumption action action #1 with a probability of 1-$\varepsilon$.

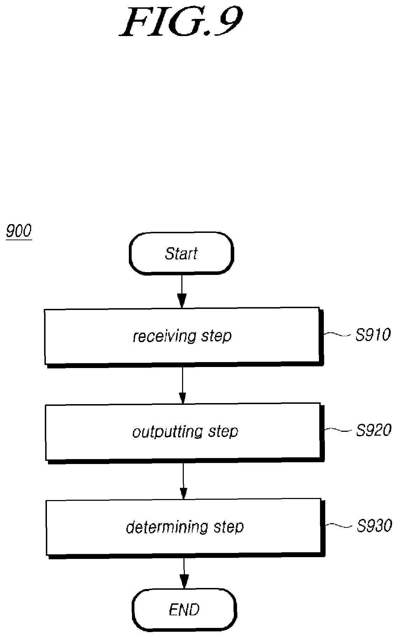

FIG. 9 is a flowchart illustrating an energy management method 900 according to embodiments of the present invention.

Referring to FIG. 9, the energy management method 900 may include a receiving step (S910), an outputting step (S920), and a determining step (S930).

The receiving step S910 may receive energy price information from an energy provider 10.

The outputting step S920 may input environment information, including the energy price information received in the receiving step S910, to an artificial neural network (ANN) and output expected energy price information. In this case, the environment information may include, e.g., 1) day information, 2) time information, 3) holiday information, 4) energy demand information, and 5) energy price information.

The determining step S930 may determine the energy consumption action at time h by each of the plurality of energy consuming devices based on determination information including the expected energy price information output in the outputting step S920. In this case, the determining unit S930 may repeat an update step of updating the Q value determined based on the energy consumption action and the energy consumption state over time by each energy consuming device, until a preset termination condition is met, to determine the energy consumption action at time h by each of the plurality of energy consuming devices.

The energy consumption action at time h of each energy consuming device may be determined to differ depending on the type of each energy consuming device. For example, the type of each energy consuming device may be any one of 1) a non-shiftable load type in which only one energy consumption action may be executed, 2) a shiftable load type in which only two energy consumption actions may be executed, and 3) a controllable load type in which a plurality of energy consumption actions corresponding to different energy consumption may be executed.

For example, the above-described termination condition may be a condition where an error between the Q value determined in the update step and the Q value determined in the update step immediately before the update step is less than or equal to a threshold error.

For example, in the determining step S930, when performing the update step for each energy consuming device, the energy consumption action at time h of each energy consuming device may be selected based on the epsilon-greedy policy.

As an example, the determining step S930 may update the Q value at time h of each energy consuming device based on: 1) the reward function value according to the energy consumption state and energy consumption action at time h of each energy consuming device and 2) the maximum value of the Q value at time h+1 of each energy consuming device, when performing the update step for each energy consuming device.

Meanwhile, the energy management method 900 described in FIG. 9 may be executed by the above-described energy management device 100.

The above-described energy management system 100 and energy management method 900 may derive expected energy price information using an artificial neural network and determine the optimal energy consumption action at time h for each of the plurality of energy consuming devices through reinforcement learning. Accordingly, the energy management system 100 and the energy management method 900 may derive an energy consumption policy optimized for various environments using a specific model through repeated reinforcement learning even without previously designing it. Accordingly, an energy management system and an energy management method adaptable to various environments may be provided without requiring a specific model.

It is also possible to minimize the sum of the cost due to energy consumption and dissatisfaction cost by applying the value of the dissatisfaction cost and the cost due to energy consumption received from each of the plurality of energy consuming devices.

The above-described energy management system 100 may be implemented by a computing device including at least some of a processor, a memory, a user input device, and a presentation device. The memory is a medium that stores computer-readable software, applications, program modules, routines, instructions, and/or data, coded to perform specific tasks when executed by a processor. The processor may read and execute the computer-readable software, applications, program modules, routines, instructions, and/or data stored in the memory. The user input device may be a means for allowing the user to input a command to the processor to execute a specific task or to input data required for the execution of the specific task. The user input device may include a physical or virtual keyboard or keypad, key button, mouse, joystick, trackball, touch-sensitive input means, or a microphone. The presentation device may include, e.g., a display, a printer, a speaker, or a vibrator.

The computing device may include various devices, such as smartphones, tablets, laptops, desktops, servers, clients, and the like. The computing device may be a single stand-alone device and may include a plurality of computing devices operating in a distributed environment composed of a plurality of computing devices cooperating with each other through a communication network.

Further, the above-described energy management method 900 may be executed by a computing device that includes a processor and a memory storing computer readable software, applications, program modules, routines, instructions, and/or data structures, coded to perform an image diagnosis method utilizing a deep learning model when executed by the processor.

The present embodiments described above may be implemented through various means. For example, the present embodiments may be implemented by various means, e.g., hardware, firmware, software, or a combination thereof.

When implemented in hardware, the image diagnosis method using a deep learning model according to the present embodiments may be implemented by, e.g., one or more application specific integrated circuits (ASICs), digital signal processors (DSPs), digital signal processing devices (DSPDs), programmable logic devices (PLDs), field programmable gate arrays (FPGAs), processors, controllers, micro-controllers, or microprocessors.

For example, the energy management method 900 according to embodiments may be implemented by an artificial intelligence semiconductor device in which neurons and synapses of the deep neural network are implemented with semiconductor devices. In this case, the semiconductor devices may be currently available semiconductor devices, e.g., SRAM, DRAM, or NAND or may be next-generation semiconductor devices, such as RRAM, STT MRAM, or PRAM, or may be combinations thereof.

When the energy management method 900 according to embodiments is implemented using an artificial intelligence semiconductor device, the results (weights) of training the deep learning model with software may be transferred to synaptic mimic devices disposed in an array, or learning may be performed in the artificial intelligence semiconductor device.

When implemented in firmware or hardware, the energy management method according to the present embodiments may be implemented in the form of a device, procedure, or function performing the above-described functions or operations. The software code may be stored in a memory unit and driven by a processor. The memory unit may be positioned inside or outside the processor to exchange data with the processor by various known means.

The above-described terms, such as "system," "processor," "controller," "component," "module," "interface," "model," or "unit," described above may generally refer to computer-related entity hardware, a combination of hardware and software, software, or software being executed. For example, the above-described components may be, but are not limited to, processes driven by a processor, processors, controllers, control processors, entities, execution threads, programs, and/or computers. For example, both an application being executed by a controller or a processor and the controller or the processor may be the components. One or more components may reside within a process and/or thread of execution, and the components may be positioned in one device (e.g., a system, a computing device, etc.) or distributed in two or more devices.

Meanwhile, another embodiment provides a computer program stored in a computer recording medium for performing the above-described energy management method 900. Further, another embodiment provides a computer-readable recording medium storing a program for realizing the above-described energy management method.

The program recorded on the recording medium may be read, installed, and executed by a computer to execute the above-described steps.

As such, for the computer to read the program recorded on the recording medium and execute the implemented functions with the program, the above-described program may include code coded in a computer language, such as C, C++, JAVA, or machine language, which the processor (CPU) of the computer may read through a computer device interface.

Such code may include a function code related to a function defining the above-described functions or may include an execution procedure-related control code necessary for the processor of the computer to execute the above-described functions according to a predetermined procedure.

Further, the code may further include additional information necessary for the processor of the computer to execute the above-described functions or memory reference-related code as to the position (or address) in the internal or external memory of the computer the media should reference.

Further, when the processor of the computer needs to communicate with, e.g., another computer or a server at a remote site to execute the above-described functions, the code may further include communication-related code as to how the processor of the computer should communicate with the remote computer or server using the communication module of the computer and what information or media should be transmitted/received upon communication.

The above-described computer-readable recording medium may include, e.g., ROMs, RAMs, CD-ROMs, magnetic tapes, floppy disks, or optical data storage devices, or may also include carrier wave-type implementations (e.g., transmissions through the Internet).

Further, the computer-readable recording medium may be distributed to computer systems connected via a network, and computer-readable codes may be stored and executed in a distributed manner.

The functional programs for implementing the present invention and code and code segments related thereto may easily be inferred or changed by programmers of the technical field to which the present invention pertains, considering, e.g., the system environments of the computer reading and executing the program.

The energy management method 900 may be implemented in the form of recording media including computer-executable instructions, such as application or program modules. The computer-readable medium may be an available medium that is accessible by a computer. The computer-readable storage medium may include a volatile medium, a non-volatile medium, a separable medium, and/or an inseparable medium. The computer-readable medium may include a computer storage medium. The computer storage medium may include a volatile medium, a non-volatile medium, a separable medium, and/or an inseparable medium that is implemented in any method or scheme to store computer-readable commands, data architecture, program modules, or other data or information.

The above-described energy management method 900 may be executed by an application installed on a terminal, including a platform equipped in the terminal or a program included in the operating system of the terminal), or may be executed by an application (or program) installed by the user on a master terminal via an application providing server, such as a web server, associated with the service or method, an application, or an application store server. In such a sense, the above-described energy management method may be implemented in an application or program installed as default on the terminal or installed directly by the user and may be recorded in a recording medium or storage medium readable by a terminal or computer.

Although it is described above that all of the components are combined into one or are operated in combination, embodiments of the disclosure are not limited thereto. One or more of the components may be selectively combined and operated as long as it falls within the scope of the objects of the disclosure. Further, although all of the components may be implemented in their respective independent hardware components, all or some of the components may be selectively combined to be implemented in a computer program with program modules performing all or some of the functions combined in one or more hardware components. The codes and code segments constituting the computer program may be easily inferred by one of ordinary skill in the art to which the disclosure pertains. The computer program may be stored in computer readable media and be read and executed by a computer to implement embodiments of the disclosure. The storage medium of the computer program may include a magnetic recording medium, an optical recording medium, and the like.

When an element "comprises," "includes," or "has" another element, the element may further include, but rather than excluding, the other element, and the terms "comprise," "include," and "have" should be appreciated as not excluding the possibility of presence or adding one or more features, numbers, steps, operations, elements, parts, or combinations thereof. All the scientific and technical terms as used herein may be the same in meaning as those commonly appreciated by a skilled artisan in the art unless defined otherwise. It will be further understood that terms, such as those defined dictionaries, should be interpreted as having a meaning that is consistent with their meaning in the context of the relevant art and will not be interpreted in an idealized or overly formal sense unless expressly so defined herein.

The above-described embodiments are merely examples, and it will be appreciated by one of ordinary skill in the art various changes may be made thereto without departing from the scope of the present invention. Accordingly, the embodiments set forth herein are provided for illustrative purposes, but not to limit the scope of the present invention, and should be appreciated that the scope of the present invention is not limited by the embodiments. The scope of the present invention should be construed by the following claims, and all technical spirits within equivalents thereof should be interpreted to belong to the scope of the present invention.

## CROSS-REFERENCE TO RELATED APPLICATION

The instant patent application claims priority under 35 U.S.C. 119(a) to Korean Patent Application No. 10-2020-0034613, filed on March 20, 2020, in the Korean Intellectual Property Office, the disclosure of which is herein incorporated by reference in its entirety. The present patent application claims priority to other applications to be filed in other countries, the disclosures of which are also incorporated by reference herein in their entireties.

## Claims

1. An energy management system controlling a plurality of energy consuming devices, comprising:

   a receiving unit receiving energy price information from an energy provider;
   an output unit outputting expected energy price information by inputting environment information including the energy price information to an artificial neural network (ANN); and
   a determining unit determining an energy consumption action at time h of each of the plurality of energy consuming devices based on determination information including the expected energy price information,
   wherein the determining unit repeats an update step of updating a Q value determined based on an energy consumption state and energy consumption action over time, of each energy consuming device, until a preset termination condition is met, to determine the energy consumption action at time h.

2. The energy management system of claim 1, wherein the energy consumption action per time of each energy consuming device is determined to differ depending on a type of each energy consuming device.

3. The energy management system of claim 2, wherein the type is any one of a non-shiftable load type in which only one energy consumption action is executable, a shiftable load type in which only two energy consumption actions are executable, and a controllable load type in which a plurality of energy consumption actions corresponding to different energy consumption are executable.

4. The energy management system of claim 1, wherein the environment information includes day information, time information, holiday information, energy demand information, and the energy price information.

5. The energy management system of claim 1, wherein when performing the update step for each energy consuming device, the determining unit updates the Q value at time h of each energy consuming device based on a reward function value according to the energy consumption state and energy consumption action at time h of each energy consuming device and a maximum value of the Q value at time h+1 of each energy consuming device

6. The energy management system of claim 5, wherein when performing the update step for each energy consuming device, the determining unit selects the energy consumption action at time h of each energy consuming device based on an epsilon-greedy policy.

7. The energy management system of claim 5, wherein the termination condition is a condition where an error between the Q value determined in the update step and the Q value determined in an update step immediately before the update step is less than or equal to a threshold error.

8. An energy management method controlling a plurality of energy consuming devices, comprising:

a receiving step receiving energy price information from an energy provider;
an outputting step outputting expected energy price information by inputting environment information including the energy price information to an artificial neural network (ANN); and
a determining step determining an energy consumption action at time h of each of the plurality of energy consuming devices based on determination information including the expected energy price information,
wherein the determining step repeats an update step of updating a Q value determined based on an energy consumption state and energy consumption action over time, of each energy consuming device, until a preset termination condition is met, to determine the energy consumption action at time h.

9. The energy management method of claim 8, wherein the energy consumption action at time h of each energy consuming device is determined to differ depending on a type of each energy consuming device.

10. The energy management method of claim 9, wherein the type is any one of a non-shiftable load type in which only one energy consumption action is executable, a shiftable load type in which only two energy consumption actions are executable, and a controllable load type in which a plurality of energy consumption actions corresponding to different energy consumption are executable.

11. The energy management method of claim 8, wherein the environment information includes day information, time information, holiday information, energy demand information, and the energy price information.

12. The energy management method of claim 8, wherein when performing the update step for each energy consuming device, the determining step updates the Q value at time h of each energy consuming device based on a reward function value according to the energy consumption state and energy consumption action at time h of each energy consuming device and a maximum value of the Q value at time h+1 of each energy consuming device

13. The energy management method of claim 12, wherein when performing the update step for each energy consuming device, the determining step selects the energy consumption action at time h of each energy consuming device based on an epsilon-greedy policy.

14. The energy management method of claim 12, wherein the termination condition is a condition where an error between the Q value determined in the update step and the Q value determined in an update step immediately before the update step is less than or equal to a threshold error.

15. A computer-readable recording medium storing a program for implementing the method of any one of claims 8 to 14.

# *FIG.1*

# FIG.2

energy management system

Policy π

State s

Action a

· · ·

Reward

Environment

State

Action

energy consuming device

# FIG.3

*100*

energy consuming device

non-shiftable load     shiftable load     controllable load

# FIG.4

State
(energy
consumption

Action
(On)

Reward
(energycost)

State
(energy
consumption

Action
(On/Off)

Reward
(energy/
dissatisfaction
cost)

State
(energy
consumption

Action
(action#1/
action#2/
action#3/
...

Reward
(energy/
dissatisfaction
cost)

non-shiftable
load

shiftable load

controllable load

100

EP 4 109 378 A1

# FIG.5

ANN

day information

time information

holiday information

energy demand information

energy price information

expected energy price information

| Input layer | hidden layer | Output layer |

# FIG.6

```
                        ┌──────────┐
                        │  Start   │
                        └──────────┘
                             │
                             ▼
S610 ─────┌────────────────────────────────────────┐
          │           initialize i=1, $Q^i$          │
          └────────────────────────────────────────┘
                             │
                             ▼
          ┌────────────────────────────────────────┐
          │   update/initialize $Q^i$ value based on energy │
S620 ───  │  consumption state and energy consumption │
          │      action of energy consuming device   │
          └────────────────────────────────────────┘
                             │
                             ▼
                        S630                          S640
                    ◇◇◇◇◇◇◇◇◇◇◇◇◇◇                ┌──────────┐
                  termination condition met?    N │          │
                  ( $|Q^i - Q^{i-1}| \leq \delta$ ) ──────────▶│  i = i + 1│
                    ◇◇◇◇◇◇◇◇◇◇◇◇◇◇                └──────────┘
                             │ Y
                             ▼
S650 ─────┌────────────────────────────────────────┐
          │    determine energy consumption action  │
          │   at time h of energy consuming device  │
          └────────────────────────────────────────┘
                             │
                             ▼
                        ┌──────────┐
                        │   END    │
                        └──────────┘
```

# FIG.7

```
           ┌──────────┐
           │  Start   │
           └────┬─────┘
                │
    ┌───────────▼───────────┐
    │         t = 1         │────S710
    └───────────┬───────────┘
                │
    ┌───────────▼───────────────────┐
    │ identify energy consumption   │
    │ state at time h               │────S720
    │ of energy consuming device    │
    └───────────┬───────────────────┘
                │
                ▼  ◄────────────────────────────┐
    ┌───────────────────────────────┐           │
    │ select energy consumption     │           │
    │ action at time h              │────S730    │
    │ according to energy           │           │
    │ consumption state             │           │
    └───────────┬───────────────────┘           │
                │                                │
    ┌───────────▼───────────────────┐           │
    │ calculate 1) reward function  │           │
    │ value at time                 │           │
    │ h of energy consuming device  │────S740    │
    │ and 2) maximum Q value at     │           │
    │ time h+1 of energy            │           │
    │ consuming device              │           │
    └───────────┬───────────────────┘           │
                │                                │
    ┌───────────▼───────────────────┐           │
    │ update Q value at time h of   │────S750    │
    │ energy consuming device       │           │
    └───────────┬───────────────────┘           │
                │                        S760     │
                ▼                                │
          ◄─────────────────►  N    ┌──────────┐ │
          update completion  ──────►│ t = t+1  │─┘──S770
          condition met?            └──────────┘
          (e.g. h = 24 − t)
          ◄─────────────────►
                │ Y
    ┌───────────▼───────────────────┐
    │ complete Q value update       │────S780
    └───────────┬───────────────────┘
                │
           ┌────▼─────┐
           │   END    │
           └──────────┘
```

# FIG.8

**non-shiftable load**
**(1 action)**

| action | probability |
|--------|-------------|
| action#0 | 1 |

**shiftable load**
**(2 action)**

| action | probability |
|--------|-------------|
| action#0/action#1 | $\varepsilon$ |
| action#1 | $1 - \varepsilon$ |

**controllable load**
**(m action)**

| action | probability |
|--------|-------------|
| (action#0 \| Action#1 \| action#2 \| action#3 \| ... \| action#m−1) | $\varepsilon$ |
| action#1 | $1 - \varepsilon$ |

# FIG.9

900

```
        ┌─────────┐
        │  Start  │
        └─────────┘
             │
             ▼
┌───────────────────────────────┐
│        receiving step         │  ~ S910
└───────────────────────────────┘
             │
             ▼
┌───────────────────────────────┐
│        outputting step        │  ~ S920
└───────────────────────────────┘
             │
             ▼
┌───────────────────────────────┐
│       determining step        │  ~ S930
└───────────────────────────────┘
             │
             ▼
        ┌─────────┐
        │   END   │
        └─────────┘
```

<div align="center">

**INTERNATIONAL SEARCH REPORT**

</div>

| International application No. |
|---|
| **PCT/KR2020/007878** |

| A. | CLASSIFICATION OF SUBJECT MATTER |
|---|---|

**G06Q 50/06**(2012.01)i; **G06N 3/08**(2006.01)i

According to International Patent Classification (IPC) or to both national classification and IPC

| B. | FIELDS SEARCHED |
|---|---|

Minimum documentation searched (classification system followed by classification symbols)

G06Q 50/06(2012.01); F24F 11/00(2006.01); G05B 13/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: HEMS(Home Energy Management System), MDP(Markov Decision Process), 수요
반응(DR, Demand Response), Q-learning, 에너지 가격 예측(energy costs forecasting), 엡실론-그리디 정책(epsilon-greedy
policy)

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br>Y | XU, Xu et al. A Multi-agent Reinforcement Learning-based Data-driven Method for Home Energy Management. IEEE Transactions on Smart Grid. pp. 1-10, 04 February 2020 [Retrieved on 25 November 2 020]. Retrieved from <https://bura.brunel.ac.uk/bitstream/2438/20259/2/FullText.pdf>.<br>    See pages 3-6; table 1; and figures 1-3. | 1-3,5-10,12-15<br>4,11 |
| Y | COLLOTTA, Mario et al. An innovative Approach for forecasting of Energy Requirements to improve a Smart Home Management System based on BLE. IEEE Transactions on Green Communications and Networking. pp. 1-10, 17 February 2017 [Retrieved on 25 November 2020]. Retrieved from <https://sci-hub.do/https://ieeexplore.ieee.org/abstract/document/7858626>.<br>    See page 4; and figure 1. | 4,11 |
| A | LEE, Sangyoon et al. Reinforcement learning-based energy management of smart home with rooftop solar photovoltaic system, energy storage system, and home appliances. Sensors. Vol. 19, Issue. 18, pp. 1-23, 1 2 September 2019 [Retrieved on 25 November 2020]. Retrieved from <https://www.mdpi.com/1424-8220 /19/18/3937/pdf>.<br>    See pages 4-5 and 7-11; and figures 1-4. | 1-15 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 December 2020** | **15 December 2020** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2020/007878** |

### C. DOCUMENTS CONSIDERED TO BE RELEVANT

| Category* | Citation of document, with indication, where appropriate, of the relevant passages | Relevant to claim No. |
|---|---|---|
| A | DING, Li et al. Reinforcement learning aided smart-home decision-making in an interactive smart grid. In : 2014 IEEE Green Energy and Systems Conference(IGESC). pp. 1-6, 24 November 2014 [Retrieved on 2 5 November 2020]. Retrieved from <https://sci-hub.do/https://ieeexplore.ieee.org/abstract/document/7018 632>. See pages 1-6; and figures 1-2. | 1-15 |
| A | US 2015-0248118 A1 (BOARD OF TRUSTEES OF THE UNIVERSITY OF ALABAMA) 03 September 2015 (2015-09-03) See paragraphs [0044]-[0063], [0081]-[0100] and [0121]-[0125]; and figures 2-3, 5A-6 and 8A-9. | 1-15 |
| X | LU, Renzhi et al. Demand response for home energy management using reinforcement learning and artificial neural network. IEEE Transactions on Smart Grid. pp. 1-11, 04 April 2020 [Retrived on 25 November 2020]. Retrieved from <https://sci-hub.do/10.1109/TSG.2019.2909266>. See pages 1-10. * This document is a known document declaring exceptions to lack of novelty by the applicant. | 1-15 |

Form PCT/ISA/210 (second sheet) (July 2019)

**INTERNATIONAL SEARCH REPORT**
Information on patent family members

International application No.

**PCT/KR2020/007878**

| Patent document cited in search report | Publication date (day/month/year) | Patent family member(s) | Publication date (day/month/year) |
|---|---|---|---|
| US 2015-0248118 A1 | 03 September 2015 | US 9817375 B2 | 14 November 2017 |

Form PCT/ISA/210 (patent family annex) (July 2019)

**REFERENCES CITED IN THE DESCRIPTION**

**Patent documents cited in the description**

• KR 1020200034613